# EUROPÄISCHE PATENTSCHRIFT

(11) **EP 2 177 423 B1**
(45) Veröffentlichungstag und Bekanntmachung des Hinweises auf die Patenterteilung: **20.02.2013**
(21) Anmeldenummer: 10001389.5
(22) Anmeldetag: 08.09.2006
(51) Int. Cl.: B60G 3/20, B60G 3/22, B62D 21/11, B60G 7/00

(54) **Längslenker für einen Hilfsrahmen**
Longitudinal linkakage for a subframe
Bras oscillant longitudinal pour châssis auxiliaire

(30) Priorität: 13.09.2005 DE 102005043764
(43) Veröffentlichungstag der Anmeldung: 21.04.2010
(62) Teilanmeldung aus: 06775942.3
(73) Patentinhaber: KSM Castings Group GmbH, 31137 Hildesheim (DE)
(72) Erfinder: Buschjohann, Thomas, 31171 Nordstemmen (DE); Kauert, Heiko, 15827 Blankenfelde (DE)
(74) Vertreter: Patentanwälte Thömen & Körner

(56) Entgegenhaltungen:
- EP-A1- 1 262 396
- DE-A1- 3 927 987
- DE-A1- 4 120 894
- DE-A1- 4 343 841
- DE-A1- 10 052 940
- DE-U1- 20 319 147
- JP-A- 2002 166 714
- JP-A- 2003 034 112
- US-B1- 6 623 020
- US-B1- 6 755 429

## Beschreibung

Die Erfingung bezieht sich auf eine besondere Ausgestaltung eines Längslenkers. Dieser zeichnet sich dadurch aus, dass derselbe in seinem Bereich zwischen einem Anlenkpunkt am Hilfsrahmen und seinem am anderen Ende einstückig angeformten Radträgerbereich ein Hohlprofil ist. Dabei kann das Hohlprofil ein geschlossenes Profil, zum Beispiel ein Rundprofil sein, das vorzugsweise aus Leichtmetall besteht, zum Beispiel aus einerAl-Legiemng.

Besonders vorteilhaft In Bezug auf eine zu erzielende hohe Steifigkeit ist es, dass Längstanker in seinem Bereich zwischen Befestlgungtstelle am Hilfsrahmen und seinem Radträgerbereich zusätzlich einen Hohlkörper enthält, wobei es hinsichtlich einer zu erzielenden Leichtbauweise vorteilhaft sein kann, wenn der Längslenker ein Al-Kokillengussteil ist, in dem der weitere Hohlkörper eingegossen ist.

Vorteilhaft kann der Längslenker mit einem Hilfsrahmen, insbesondere einem Hinterachs-Hilfsrahmen verbunden sein, der aus zwei Hilfsrahmen-Seitenteilen besteht, die zumindest annähernd V-förmig ausgebildet sind, in einer solchen Anordnung, dass deren Scheitelpunkte aufeinander zu gerichtet sind und über ein quer zur Fahrzeuglängsachse liegendes Hilfsrahmen-Mittelteil miteinander verbunden sind, die Hilfsrahmen-Seitenteile und das Hilfsrahmen-Mittelteil als Hohlprofile ausgebildet sind und die Hilfsrahmen-Seitenteile zumindest drei der nachfolgend angeführten Aufnahmen bzw. Ausnehmungen für
- die oberen Querlenker
- die unteren Querlenker
- den Stabilisator
- die Längslenker
- die Befestigung des Hilfsrahmens an der Karosserie
aufweisen.

Dabei kann es besonders vorteilhaft sein, wenn die V-förmigen Hilfsrahmen-Seitenteile einen U-förmigen Querschnitt aufweisen mit zwischen den Schenkeln verlaufenden Verstärkungsrippen.

Die V-förmigen Seitenteile können in ihrem Scheitelbereich den Fuß eines Y angeformt haben mit einem dem Hilfsrahmen-Mittelteil entsprechenden Querschnitt, wobei das Hilfsrahmen-Mittelteil in den Scheitelbereichen bzw. dem Fußbereich des Y aufgenommen sein kann. Als Profil für das Hilfsrahmen-Mittelteil kann sich in besonders vorteilhafter Weise ein viereckiges Hohlprofil eignen, das ein Strangpressprofil sein kann.

Bei Einsatz unterschiedlich langer Hilfsrahmen-Mittelteile können Fahrzeuge mit unterschiedlicher Spurbreite mit einheitlichen Hilfsrahmen-Seitenteilen ausgerüstet werden, was wegen der zum Einsatz kommenden höheren Stückzahlen eine preiswerte Herstellung erheblich begünstigt.

Vorteilhaft ist es weiterhin, wenn die Hilfsrahmen-Seitenteile und/oder das Hilfsrahmen-Mittelteil aus Leichtmetall bestehen, wobei sich in besonders günstiger Weise Al-Legierungen eignen. Dabei können die Hilfsrahmen-Seitenteile Druckgussteile sein und das Hilfsrahmen-Mittelteil, wie bereits erwähnt, ein Strangpressprofil. Solche Teile lassen sich auch in relativ einfacher Weise miteinander durch Schweißen verbinden.

Die Ausnehmungen zur Befestigung des Hilfsrahmens an der Karosserie bzw. zur Durchführung von Befestigungselementen sind dabei zweckmäßigerweise jeweils am Ende der Schenkel der Hilfsrahmen-Seitenteile vorgesehen.

Anhand der Figuren 1 bis 7 sei die Erfindung näher erläutert.

Dabei zeigt
Figur 1 eine Hinterachse mit einem Hilfsrahmen 1 und daran befestigten Achselementen am Beispiel einer nicht angetriebenen Hinterachse.
Figur 2 zeigt eine Ansicht aus der Figur 1 mit um die Achsen XYZ vorgenommener Verschwenkung,
Figur 3 den Hilfsrahmen 1 aus einer der Figur 2 entsprechenden Perspektive,
Figur 4 eine Ansicht des Hilfsrahmens 1 aus einer ähnlichen Sicht wie Figur 1.
Die Figuren 5 bis 7 zeigen den Längslenker gemäß dem Erfindungsgedanken, wobei

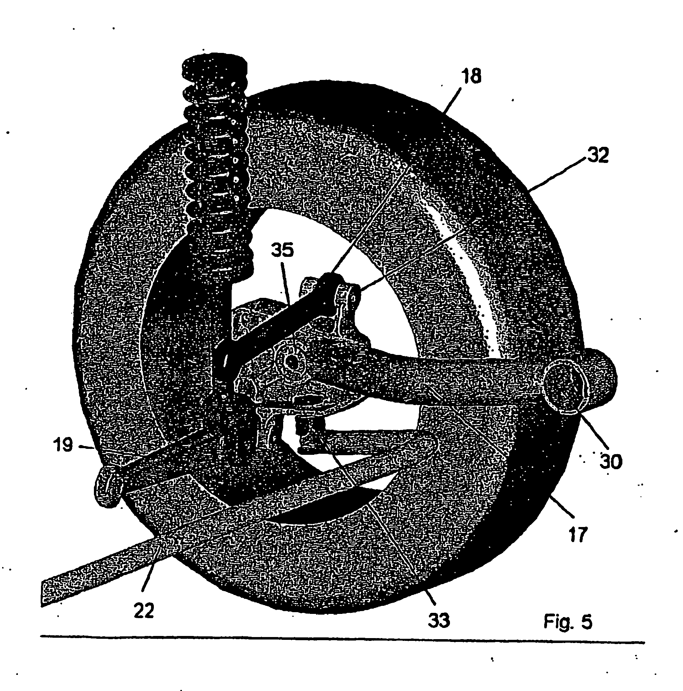

Figur 5 den Längslenker in eingebautem Zustand zeigt,

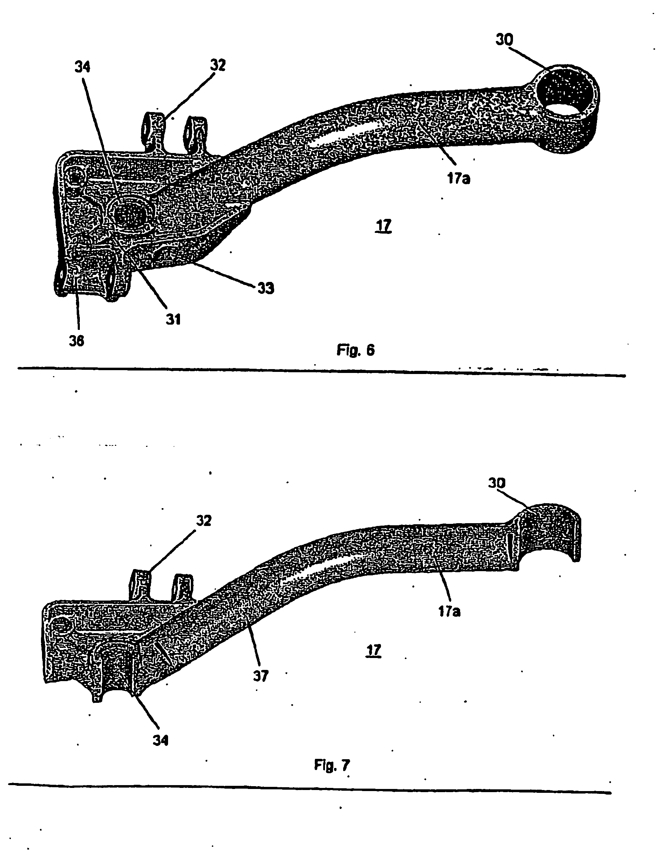

Figur 6 einen solchen in Ansicht und
Figur 7 einen solchen in aufgeschnittenem Zustand.

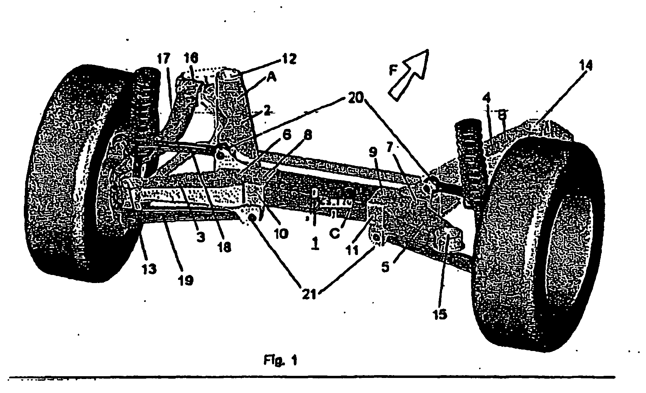

Der Hilfsrahmen 1 besteht, mit Sicht auf die Figur 1 und in Fahrtrichtung F gesehen, aus einem linken Hilfsrahmen-Seitenteil A und einem rechten Hilfsrahmen-Seitenteil B. Jedes der Seitenteile besitzt zumindest annähernd V-förmige Gestalt mit Schenkeln 2, 3 sowie 4, 5. Die beiden Schenkel treffen sich jeweils in ihrem Scheitelbereich 6, 7 und haben weiterhin einen Fußansatz 8,9 und somit insgesamt eine zumindest annähernd Y-förmige Gestalt. Die Fußansätze weisen in Richtung der Fahrzeuglängsachse, also aufeinander zu und haben die Profilierung eines Rechteckes 10, 11 in denen das Hilfsrahmen-Mittelteil C aufgenommen und mit den Profilen 8, 9 verschweißt ist.

An den Enden der V-förmigen Schenkel sind jeweils die Befestigungsstellen bzw. die Aufnahmen für den Durchgang von Befestigungsmittel zur Anlenkung des Hilfsrahmens an der Karosserie bzw. am Chassis des Fahrzeuges vorgesehen, und zwar besitzt das linke Hilfsrahmen-Seitenteil A eine vordere Befestigungsstelle 12, eine hintere Befestigungsstelle 13 und das rechte Hilfsrahmen-Seitenteil B eine vordere Befestigungsstelle 14 und eine hintere Befestigungsstelle 15. Der Hilfsrahmen besitzt weiterhin Aufnahmestellen für die Befestigung von Teilen der Hinterachse, die der Einfachheit wegen für das rechte und das linke Seitenteil mit jeweils gleichen Bezugszeichen versehen sind und zum Teil auch nur einmal dargestellt sind, nachdem es sich praktisch um spiegelbildliche Anordnungen handelt.

An der Befestigungsstelle 16 ist der Längslenker 17 angelenkt, die oberen und unteren Querlenker 18, 19 sind an Befestigungsstellen 20, 21 angelenkt.

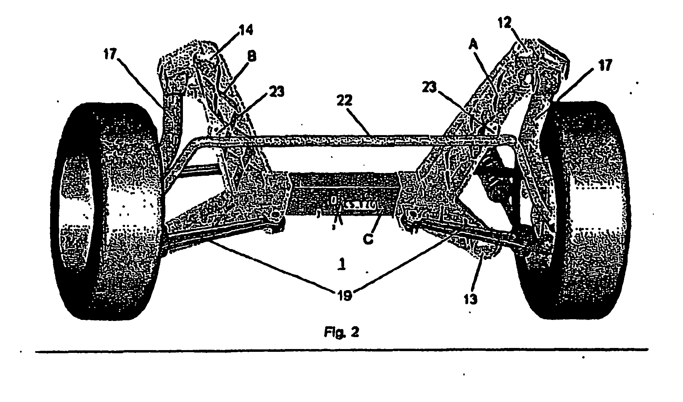

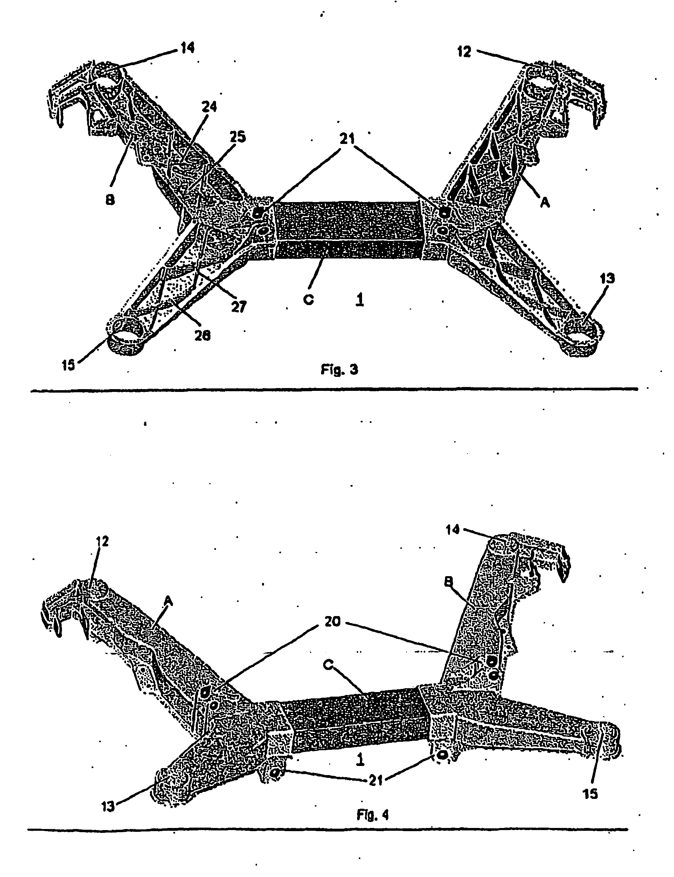

Für den Stabilisator 22 sind, wie dies insbesondere im Zusammenhang mit den Figuren 2 und 3 hervorgeht, Befestigungsstellen 23 am unteren Bereich der Hilfsrahmen-Seitenteile vorgesehen.

Wie insbesondere im Zusammenhang mit den Figuren 2 und 3 ersichtlich ist, haben die Hilfsrahmen-Seitenteile einen U-förmigen Querschnitt mit Verstärkungsrippen 24, 25 und 26, 27, die zumindest im Wesentlichen zwischen den U-förmigen Schenkeln der Seitenteile verlaufen. Die Hilfsrahmen-Seitenteile A, B können in besonders günstiger Weise aus Aluminium-Druckguss bestehen, während das Hilfsrahmen-Mittelteil C zweckmäßigerweise ein Rechteck-Hohlprofil ist, das als Aluminium-Strangpressprofil hergestellt sein kann.

Durch Variierung der Länge des Hilfsrahmen-Mittelteiles C können in besonders preiswerter Weise Hinterachsen mit unterschiedlicher Spurbreite erzeugt werden.

Zur Realisierung einer preiswerten Hinterachse insbesondere, jedoch nicht ausschließlich im Zusammenhang mit der vorliegenden Erfindung kann sich auch gemäß einem weiteren erfinderischen Gedanken ein Längslenker 17 gemäß den Figuren 5, 6 und 7 eignen, der mit seinem Auge 30 an der Befestigungsstelle 16 angelenkt sein kann und der an seinem gegenüberliegenden Ende den Radträgerbereich 31 einstückig angeformt hat. Der Bereich 32 dient zur Ablenkung des oberen Querlenkers 18 und die Anlenkstelle 33 zur Anlenkung des Stabilisators 22. In einer Aufnahmeöffnung 34 ist ein Stahl-Achszapfen 35 zur Aufnahme des Radlagers vorgesehen. Eine Befestigungsstelle 36 dient zur Anlenkung des Querlenkers 19.

Der Längslenker 17 mit seinem einstückig angeformten Radträgerbereich 31 kann in besonders günstiger Weise als Aluminium-Kokillen-Gussteil hergestellt sein, welches in seinem zwischen den Befestigungsstellen 30 und 34 liegenden Bereich 17a ein Aluminiumrohr, das eingegossen ist, enthält. Dadurch ist der entsprechende Längslenker als Hohlprofil für eine hohe Steifigkeit bei gleichzeitig geringer Masse und geringen Kosten ausgebildet.

## Patentansprüche

1. Längslenker für einen Hitfsrahmen, wobei der Längslenker im Bereich zwischen seinem Anlenkpunkt am Hilfsrahmen und seinem einstückig angeformten Radträgerbereich ein Hohlprofil ist, **dadurch gekennzeichnet, dass** der Langslenker in diesem Bereich zwischen dem Anlenkpunkt und dem einstückig angeformten Radträgerbereich zusätzlich einen die Steifigkeit des Längstenkers erhöhenden Hohlkörper enthält.

2. Längslenker nach Anspruch 1, **dadurch gekennzeichnet, dass** das Hohlprofil ein geschlossenes Profil ist.

3. Längslenker nach einem der Ansprüche 1 bis 2, **dadurch gekennzeichnet, dass** der Längslenker ein Aluminium-Kokillen-Gussteil ist.

4. Längslenker nach Anspruch 1, **dadurch gekennzeichnet, dass** der Hohlkörper in den Längslenker eingegossen ist.

5. Längslenker nach Anspruch 4, **dadurch gekennzeichnet, dass** der Hohlkörper ein Al-Hohlprofil ist.

6. Längslenker nach einem der Ansprüche 1 bis 5 **dadurch gekennzeichnet, dass** der Längslenker mit einem Hilfsrahmen, insbesondere einem Hinterachshilfsrahmen für Mehrtenker-Hinterachsen von Kraftfahrzeugen, verbunden ist, wobei der Hilfsrahmen aus zwei Hiffsrahmen-Seitenteiten besteht, die zumindest annähernd V-förmig ausgebildet sind, in einer Anordnung, dass deren Scheitelpunkte aufeinander gerichtet sind und über ein quer zur Fahrzeuglängsachse liegendes Hilfsrahmen-Mittelteil miteinander verbunden sind, wobei die Hilfsrahmen-Seitenteile und das Hilfsmhmen-Mittelteil Hohlprofile sind und die Hilfsrahmen-Seitenteile zumindest drei der nachfolgend angeführten Aufnahmen bzw. Ausnehmungen
- die oberen Querlenker
- die unteren Querlenker
- den Stabilisator
- die Längslenker
- die Befestigung des Hilfsrahmens an der Karosserie
aufweisen.

7. Längslenker nach Anspruch 6 **dadurch gekennzeichnet, dass** die Förmigen Hilfsrahmerl-Seiterlteile einen U-förmigen Querschnitt aufweisen mit zwischen den Schenkeln verlaufenden Verstärkungsrippen.

8. Längslenker nach Anspruch 6 oder 7; **dadurch gekennzeichnet, dass** die V-förmigen Seitenteile im Scheitelbereich den Fuß eines Y abgeformt haben mit einem dem Hiftsrahmen-Mitteltell entsprechenden Querschnitt.

9. Längslenker nach einem der Ansprüche 6 bis 8, **dadurch gekennzeichnet, dass** das Hillsrahmen-Mitteltell in den Scheitelbereichen bzw. dem Fußbereich des Y aufgenommen ist.

10. Längslenker nach einem der Ansprüche 6 bis 9, **dadurch gekennzeichnet, dass** das Hilfsrahmen-Mittelteil ein viereckiges Hohlprofil ist.

11. Längslenker nach einem der Ansprüche 6 bis 10, **dadurch gekennzeichnet, dass** die V- bzw. Y-förmigen Hilfsrahmen-Seitenteile und der Hilfsrahmen-Mittelträger miteinander verschweißt sind.

12. Längslenker nach einem der Ansprüche 6 bis 11, **dadurch gekennzeichnet, dass** die Hitfsrahmen-Seitenteile und/ oder das Hilferahmen-Miftelteil aus Leichtmetall bestehen.

13. Längslenker nach Anspruch 12, **dadurch gekennzeichnet, dass** das Leichtmetall eine Al-Legierüng ist.

14. Längslenker nach einem der Ansprüche 6 bis 13, **dadurch gekennzeichnet, dass** die Hilfsrahmen-Seitenteite Druckgussteile sind.

15. Längslenker nach einem der Ansprüche 6 bis 14, **dadurch gekennzeichnet, dass** das Hilfsrahmen-Mittelteil ein Strangpressprofil ist.

16. Längslenker nach einem der Ansprüche 6 bis 15, **dadurch gekennzeichnet, dass** die Ausnehmungen zur Befestigung des Hilfsrahmens an der Karosserie am Ende der Schenkel der Hilfsrahmen-Seilenteile vorgesehen sind.

## Claims

1. A longitudinal link for a subframe, wherein the longitudinal link, in the region between its point of attachment to the subframe and its integrally moulded-on wheel carrier region, is a hollow profile, **characterised in that** the longitudinal link in this region between the attachment point and the integrally moulded-on wheel carrier region additionally contains a hollow body which increases the rigidity of the longitudinal link.

2. The longitudinal link according to claim 1, **characterised in that** the hollow profile is a closed profile.

3. The longitudinal link according to one of claims 1 to 2, **characterised in that** the longitudinal link is an aluminium moulded cast part.

4. The longitudinal link according to claim 1, **characterised in that** the hollow body is cast into the longitudinal link.

5. The longitudinal link according to claim 4, **characterised in that** the hollow body is an Al hollow profile.

6. The longitudinal link according to one of claims 1 to 5 **characterised in that** the longitudinal link is connected to a subframe, in particular a rear-axle subframe for multi-link rear axles of motor vehicles, wherein the subframe consists of two subframe side parts, which are configured approximately V-shaped, in an arrangement that their vertices are directed towards one other and are connected to one another via a subframe middle part that is transverse to the vehicle longitudinal axis, wherein the subframe side parts and the subframe middle part are hollow profiles and the subframe side parts have at least three of the receptacles or recesses listed below
- the upper wishbones
- the lower wishbones
- the stabilizer
- the longitudinal links
- the attachment of the subframe to the bodywork.

7. The longitudinal link according to claim 6 **characterised in that** the V-shaped subframe side parts have a U-shaped cross-section with reinforcing ribs which run between the legs.

8. The longitudinal link according to claim 6 or 7, **characterised in that** the V-shaped side parts in the vertex region have formed the base of a Y with a cross-section corresponding to the subframe middle part.

9. The longitudinal link according to one of claims 6 to 8, **characterised in that** the subframe middle part is received in the vertex regions or base region of the Y.

10. The longitudinal link according to one of claims 6 to 9, **characterised in that** the subframe middle part is a four-sided hollow profile.

11. The longitudinal link according to one of claims 6 to 10, **characterised in that** the V-shaped or Y-shaped subframe side parts and the subframe central carrier are welded onto one another.

12. The longitudinal link according to one of claims 6 to 11, **characterised in that** the subframe side parts and/or the subframe middle part are made of light metal.

13. The longitudinal link according to claim 12, **characterised in that** the light metal is an Al alloy.

14. The longitudinal link according to one of claims 6 to 13, **characterised in that** the subframe side parts are diecast parts.

15. The longitudinal link according to one of claims 6 to 14, **characterised in that** the subframe middle part is an extruded profile.

16. The longitudinal link according to one of claims 6 to 15, **characterised in that** the recesses for attaching the subframe to the bodywork are provided at the end of the legs of the subframe side parts.

## Revendications

1. Bras oscillant longitudinal pour un faux-châssis, ledit bras oscillant longitudinal étant un profilé creux dans la partie comprise entre son point d'articulation sur le faux-châssis et sa partie de support de roue formée d'un seul tenant, **caractérisé en ce que** ledit bras oscillant longitudinal comprend en outre, dans ladite partie entre le point d'articulation et la partie de support de roue formée d'un seul tenant, un corps creux renforçant la rigidité dudit bras oscillant longitudinal.

2. Bras oscillant longitudinal selon la revendication 1, **caractérisé en ce que** le profilé creux est un profilé fermé.

3. Bras oscillant longitudinal selon l'une quelconque des revendications 1 à 2, **caractérisé en ce que** ledit bras oscillant longitudinal est une pièce d'aluminium moulée en coquille.

4. Bras oscillant longitudinal selon la revendication 1, **caractérisé en ce que** le corps creux est coulé dans le bras oscillant longitudinal.

5. Bras oscillant longitudinal selon la revendication 4, **caractérisé en ce que** le corps creux est un profilé creux en aluminium.

6. Bras oscillant longitudinal selon l'une des revendications 1 à 5, **caractérisé en ce que** ledit bras oscillant longitudinal est raccordé à un faux-châssis, en particulier un faux-châssis pour essieux arrière à plusieurs bras oscillants de véhicules automobiles, ledit faux-châssis étant constitué de deux parties latérales de faux-châssis, lesquelles sont réalisées au moins sensiblement en forme de V dans un agencement tel que leurs points de sommets sont dirigés l'un vers l'autre et qu'elles sont reliées entre elles par l'intermédiaire d'une partie centrale de faux-châssis transversal à l'axe longitudinal du véhicule, les parties latérales de faux-châssis et la partie centrale de faux-châssis étant des profilés creux, et les parties latérales de faux-châssis présentant au moins trois des logements ou évidements ci-après :
- pour les bras oscillants transversaux supérieurs
- pour les bras oscillants transversaux inférieurs
- pour le stabilisateur
- pour les bras oscillants longitudinaux
- pour la fixation du faux-châssis sur la carrosserie.

7. Bras oscillant longitudinal selon la revendication 6, **caractérisé en ce que** les parties latérales de faux-châssis en forme de V présentent une section transversale en forme de U avec des nervures de renforcement s'étendant entre les branches.

8. Bras oscillant longitudinal selon la revendication 6 ou 7, **caractérisé en ce que** les parties latérales en forme de V forment dans la zone de sommet le pied d'un Y avec une section transversale correspondant à la partie centrale de faux-châssis.

9. Bras oscillant longitudinal selon l'une des revendications 6 à 8, **caractérisé en ce que** la partie centrale de faux-châssis est logée dans les zones de sommet ou dans la zone de pied du Y.

10. Bras oscillant longitudinal selon l'une des revendications 6 à 9, **caractérisé en ce que** la partie centrale de faux-châssis est un profilé creux rectangulaire.

11. Bras oscillant longitudinal selon l'une des revendications 6 à 10, **caractérisé en ce que** les parties latérales de faux-châssis en forme de V ou Y et la partie centrale de faux-châssis sont soudées entre elles.

12. Bras oscillant longitudinal selon l'une des revendications 6 à 11, **caractérisé en ce que** les parties latérales de faux-châssis et/ou la partie centrale de faux-châssis sont en métal léger.

13. Bras oscillant longitudinal selon la revendication 12, **caractérisé en ce que** le métal léger est un alliage d'aluminium.

14. Bras oscillant longitudinal selon l'une des revendications 6 à 13, **caractérisé en ce que** les parties latérales de faux-châssis sont des pièces moulées sous pression.

15. Bras oscillant longitudinal selon l'une des revendications 6 à 14, **caractérisé en ce que** la partie centrale de faux-châssis est un profilé extrudé.

16. Bras oscillant longitudinal selon l'une des revendications 6 à 15, **caractérisé en ce que** les évidements pour la fixation du faux-châssis sur la carrosserie sont prévus à l'extrémité des branches des parties latérales de faux-châssis.
